# EUROPEAN PATENT APPLICATION

(11) **EP 3 319 268 A1**
(43) Date of publication of application: **09.05.2018**
(21) Application number: 15897006.1
(22) Date of filing: 18.11.2015
(51) Int. Cl.: H04L 9/32, H04L 29/06, G06Q 20/38

(54) **IDENTITY INFORMATION AUTHENTICATION METHOD, USER TERMINAL, SERVICE TERMINAL, AUTHENTICATION SERVER, AND SERVICE SYSTEM**

(30) Priority: 30.06.2015 CN 201510373183
(71) Applicant: BOE Technology Group Co., Ltd., Beijing 100015 (CN)
(72) Inventor: WANG, Hao, Beijing 100176 (CN); MAO, Defeng, Beijing 100176 (CN)
(74) Representative: Isarpatent
(86) International application number: PCT/CN2015/094858
(87) International publication number: WO 2017/000479

(57) **Abstract**

An identity information authentication method, and related apparatuses and system are provided. The method includes: receiving an authentication request from a service terminal; sending first encrypted information to the service terminal, so that the service terminal forwards the first encrypted information to an authentication server, the authentication server parses and authenticates the first encrypted information; receiving second encrypted information from the authentication server, the second encrypted information being generated by the authentication server after authenticating the first encrypted information to be valid, and transmitted by the authentication server to the user terminal through the service terminal; parsing and authenticating the second encrypted information; and acquiring a user biological identifier if the second encrypted information is authenticated to be valid and transmitting the biological identifier to the service terminal for authentication, so that the service terminal provides service to the user after authenticating the biological identification successfully.

## Description

### CROSS REFERENCE OF RELATED APPLICATION

This application claims a priority to Chinese patent application No. 201510373183.6, filed with the Chinese State Intellectual Property Office on June 30, 2015, which is incorporated herein by reference in its entirety.

### FIELD

The present disclosure relates to the field of information authentication, and in particular, to an identity information authentication method, a user terminal, a service terminal, an authentication server, and a service system.

### BACKGROUND

With the development of science and technology, personal information is increasingly used in authentication scenes, and in particular, personal identification is often used in payment services. It is difficult for a user to verify whether an authentication system is from a valid source, and thus there is a risk that the personal information may be stolen by a phishing system, resulting in irreparable property damage.

Currently, solutions based on biological identifier have not been widely applied in transaction authentication, and there is a need for a technology solution with which the personal information of the user may not be stolen during transaction.

### SUMMARY

An identity information authentication method, and related apparatuses and system are provided in the present disclosure, which can prevent user personal information from being stolen by others in the process of using biological identifier.

An identity information authentication method applied to a user terminal is provided according to some embodiments of the present disclosure, which includes:
receiving an authentication request sent by a service terminal;
sending first encrypted information to the service terminal, so that the service terminal forwards the first encrypted information to an authentication server, and the authentication server parses and authenticates the first encrypted information;
receiving second encrypted information fed back by the authentication server, where the second encrypted information is generated by the authentication server after authenticating the first encrypted information to be valid, and is transmitted by the authentication server to the user terminal through the service terminal;
parsing and authenticating the second encrypted information; and
acquiring a biological identifier of a user in the case that the second encrypted information is authenticated to be valid and transmitting the biological identifier to the service terminal for authentication, so that the service terminal provides service to the user after the biological identifier is authenticated successfully.

Optionally, a private key signature of the user terminal is carried in the first encrypted information, the authentication server authenticates the private key signature of the user terminal carried in the first encrypted information after parsing the first encrypted information; determines that the first encrypted information is valid, in the case that the private key signature of the user terminal is authenticated successfully; and determines that the first encrypted information is invalid, in the case that the private key signature of the user terminal is not authenticated successfully.

Optionally, a public key signature of the service terminal is carried in the second encrypted information; the parsing and authenticating the second encrypted information includes: parsing the second encrypted information to acquire the public key signature of the service terminal carried in the second encrypted information; authenticating the public key signature of the service terminal; determining that the second encrypted information is valid, in the case that the public key signature of the service terminal is authenticated successfully; and determining that the second encrypted information is invalid, in the case that the public key signature of the service terminal is not authenticated successfully.

Optionally, the first encryption information is encrypted according to a first encryption algorithm preset by the user terminal and the authentication server together, and the authentication server parses the first encrypted information according to a first decryption algorithm preset by the user terminal and the authentication server together;
the second encryption information is encrypted according to a second encryption algorithm preset by the user terminal and the authentication server together, and the user terminal parses the second encrypted information according to a second decryption algorithm preset by the user terminal and the authentication server together,
where the first encryption algorithm is different from the second encryption algorithm, and the first decryption algorithm is different from the second decryption algorithm.

Furthermore, an identity information authentication method applied to a service terminal is provided according to some embodiments of the present disclosure, which includes:
sending an authentication request to a user terminal;
receiving first encrypted information fed back by the user terminal in response to the authentication request;
forwarding the first encrypted information to an authentication server, so that the authentication server parses and authenticates the first encrypted information;
receiving second encrypted information transmitted by the authentication server, where the second encrypted information is generated by the authentication server after authenticating the first encrypted information to be valid;
forwarding the second encrypted information to the user terminal;
receiving a biological identifier of a user transmitted by the user terminal, the biological identifier being acquired by the user terminal after authenticating the second encrypted information to be valid; and
authenticating the biological identifier, and providing the user with service after the biological identifier is authenticated successfully.

Optionally, a private key signature of the user terminal is carried in the first encrypted information, the authentication server authenticates the private key signature of the user terminal carried in the first encrypted information after parsing the first encrypted information; determines that the first encrypted information is valid, in the case that the private key signature of the user terminal is authenticated successfully; and determines that the first encrypted information is invalid, in the case that the private key signature of the user terminal is not authenticated successfully.

Optionally, a public key signature of the service terminal is carried in the second encrypted information, the user terminal authenticates the public key signature of the service terminal carried in the second encrypted information after parsing the second encrypted information; determines that the second encrypted information is valid, in the case that the public key signature of the service terminal is authenticated successfully; and determines that the second encrypted information is invalid, in the case that the public key signature of the service terminal is not authenticated successfully.

Optionally, the first encryption information is encrypted according to a first encryption algorithm preset by the user terminal and the authentication server together, and the authentication server parses the first encrypted information according to a first decryption algorithm preset by the user terminal and the authentication server together;
the second encryption information is encrypted according to a second encryption algorithm preset by the user terminal and the authentication server together, and the user terminal parses the second encrypted information according to a second decryption algorithm preset by the user terminal and the authentication server together,
where the first encryption algorithm is different from the second encryption algorithm, and the first decryption algorithm is different from the second decryption algorithm.

Furthermore, an identity information authentication method applied to an authentication server is provided according to some embodiments of the present disclosure, which includes:
receiving first encrypted information forwarded by a service terminal, where the first encrypted information is generated by a user terminal after receiving an authentication request from the service terminal;
parsing and authenticating the first encrypted information;
generating second encrypted information, in the case that the first encrypted information is authenticated to be valid;
transmitting the second encrypted information to the service terminal, so that the service terminal forwards the second encrypted information to the user terminal, and the user terminal parses and authenticates the second encrypted information.

Optionally, a private key signature of the user terminal is carried in the first encrypted information. The parsing and authenticating the first encrypted information includes: parsing the first encrypted information to acquire the private key signature of the user terminal carried in the first encrypted information; authenticating the private key signature of the user terminal; determining that the first encrypted information is valid, in the case that the private key signature of the user terminal is authenticated successfully; and determining that the first encrypted information is invalid, in the case that the private key signature of the user terminal is not authenticated successfully.

Optionally, a public key signature of the service terminal is carried in the second encrypted information, the user terminal authenticates the public key signature of the service terminal carried in the second encrypted information after parsing the second encrypted information; determines that the second encrypted information is valid, in the case that the public key signature of the service terminal is authenticated successfully; and determines that the second encrypted information is invalid, in the case that the public key signature of the service terminal is not authenticated successfully.

Optionally, the first encryption information is encrypted according to a first encryption algorithm preset by the user terminal and the authentication server together, and the authentication server parses the first encrypted information according to a first decryption algorithm preset by the user terminal and the authentication server together;
the second encryption information is encrypted according to a second encryption algorithm preset by the user terminal and the authentication server together, and the user terminal parses the second encrypted information according to a second decryption algorithm preset by the user terminal and the authentication server together,
where the first encryption algorithm is different from the second encryption algorithm, and the first decryption algorithm is different from the second decryption algorithm.

Furthermore, a user terminal is further provided according to some embodiments of the present disclosure, which includes one or more hardware processors and a storage medium in which computer-readable operational instructions are stored. When the computer-readable operational instructions in the storage medium are run, the one or more hardware processors execute the identity information authentication method applied to the user terminal described above.

Optionally, the biological identifier of the user is a fingerprint feature and/or a retinal feature of the user; and the user terminal is a mobile device having a fingerprint collector and/or a retina collector.

Furthermore, a service terminal is further provided according to some embodiments of the present disclosure, which includes one or more hardware processors and a storage medium in which computer-readable operational instructions are stored. When the computer-readable operational instructions in the storage medium are run, the one or more hardware processors execute the identity information authentication method applied to the service terminal described above.

Optionally, the service terminal is a teller machine.

Furthermore, an authentication server is further provided according to some embodiments of the present disclosure, which includes one or more hardware processors and a storage medium in which computer-readable operational instructions are stored. When the computer-readable operational instructions in the storage medium are run, the one or more hardware processors execute the identity information authentication method applied to the authentication server described above.

Furthermore, a service system is further provided according to some embodiments of the present disclosure, which includes the user terminal, the service terminal, and the authentication server described above.

The technical solution of the present disclosure is based on bi-directional authentication between the user side and the service side. The service terminal is responsible for forwarding the authentication information interacted between the user terminal and the authentication server. In practice, the authentication server is normally connected to a valid service terminal through an encrypted link. If the service terminal is an invalid phishing device, a forwarding function cannot be achieved by the service terminal and the bi-directional authentication fails, so that the user can be alerted timely. In addition, the biological identifier of the user is collected by the user terminal in the embodiments of the present disclosure, but is not collected on the service terminal. Therefore, even if a fraudulent person sets a phishing device on a valid service terminal, there is no chance of stealing user personal information.

### BRIEF DESCRIPTION OF THE DRAWINGS

Figure 1 is a schematic flowchart of an identity information authentication method at a user terminal side provided in the present disclosure;
Figure 2 is a schematic flowchart of an identity information authentication method at a service terminal side provided in the present disclosure;
Figure 3 is a schematic flowchart of an identity information authentication method at an authentication server side provided in the present disclosure;
Figure 4 is a detailed schematic flowchart of an identity information authentication method provided in the present disclosure; and
Figure 5 is a schematic framework diagram of a service system provided in the present disclosure.

### DETAILED DESCRIPTION

To clarify technical solutions and advantages of the present disclosure, detailed description is made hereinafter in conjunction with the accompanying drawings and specific embodiments.

In view of the problem that a user cannot determine whether a service terminal in the related technology is valid, an identity information authentication method is provided in the present disclosure, which enables the user to authenticate the validity of the service terminal through a personal terminal device of the user.

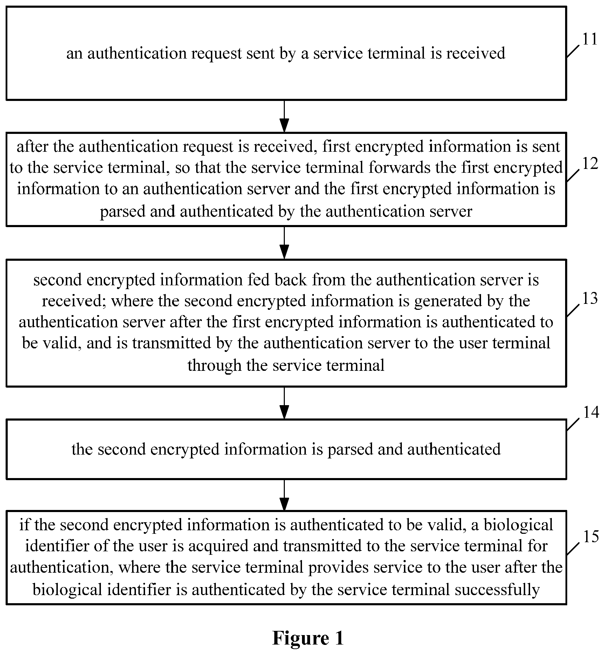

As shown in Figure 1, an identity information authentication method applied at a user terminal side is provided in the present disclosure, which includes the following steps 11 to 15.

In step 11, an authentication request sent by a service terminal is received.

Specifically, when a user wants to use a service function of the service terminal, the user may establish a wireless connection with the service terminal through a user terminal of the user and request for authenticating identity information of the service terminal, so that the service terminal sends an authentication request to the user terminal.

In step 12, after the authentication request is received, first encrypted information is sent to the service terminal, so that the service terminal forwards the first encrypted information to an authentication server and the first encrypted information is parsed and authenticated by the authentication server.

The first encrypted information may be generated according to an encryption algorithm set by the user terminal and the authentication server together.

In step 13, second encrypted information fed back from the authentication server is received; where the second encrypted information is generated by the authentication server after the first encrypted information is authenticated to be valid, and is transmitted by the authentication server to the user terminal through the service terminal.

The second encrypted information may also be generated according to an encryption algorithm set by the user terminal and the authentication server together. For high security, the encryption algorithm for the second encryption information is different from the encryption algorithm for the first encryption information, that is, if the user terminal and the authentication server are aware of only one encryption algorithm, the bidirectional authentication mechanism cannot be accomplished.

In step 14, the second encrypted information is parsed and authenticated.

Specifically, the user terminal parses the second encrypted information according to a decryption algorithm preset by the user terminal and the authentication server together; if the second encrypted information is parsed successfully, the authentication server and the service terminal are determined to be valid; if the second encrypted information is not parsed successfully, no subsequent process is to be performed, and the user is warned immediately.

In step 15, if the second encrypted information is authenticated to be valid, a biological identifier of the user is acquired and transmitted to the service terminal for authentication, where the service terminal provides service to the user after the biological identifier is authenticated by the service terminal successfully.

The biological identifier of the user is preferably a unique identity such as fingerprint features, retinal features. The service terminal may be a transaction device such as a teller machine, and the biological identifier transmitted from the user terminal may be used as a login password of a user account.

As can be seen from the above description, in the identity information authentication method according to embodiments of the present disclosure, the user terminal needs to perform bi-directional authentication with the authentication server to determine whether the service terminal is valid. Different from bi-directional authentication in related technology, in the identity information authentication method according to the embodiments of the present disclosure, the user terminal transmits encrypted data to an unknown service terminal directly. Since an invalid service terminal cannot process the encrypted data transmitted from the user terminal, the user still can determine whether the unknown service terminal is valid without using the authentication server in some certain scenes. In addition, the biological identifier of the user is collected and sent by the user terminal, but is not collected by the service terminal; therefore, even if a fraudulent person sets a phishing device on a valid service terminal, there is no chance of stealing personal information of the user.

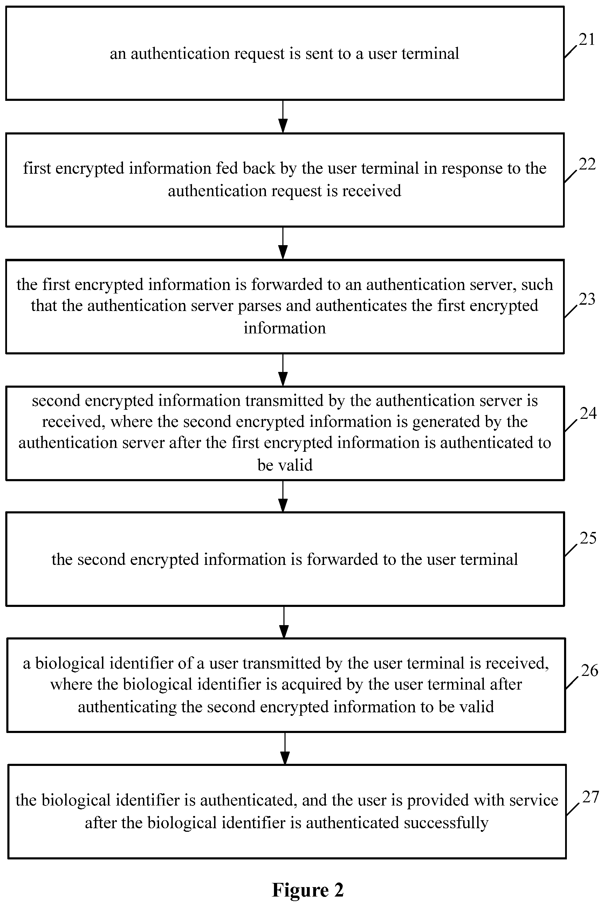

Correspondingly, as shown in Figure 2, an identity information authentication method applied at a service terminal side is provided in the present disclosure, which includes the following steps 21 to 27.

In step 21, an authentication request is sent to a user terminal.

In step 22, first encrypted information fed back by the user terminal in response to the authentication request is received.

In step 23, the first encrypted information is forwarded to an authentication server, such that the authentication server parses and authenticates the first encrypted information.

In step 24, second encrypted information transmitted by the authentication server is received, where the second encrypted information is generated by the authentication server after the first encrypted information is authenticated to be valid.

In step 25, the second encrypted information is forwarded to the user terminal.

In step 26, a biological identifier of a user transmitted by the user terminal is received, where the biological identifier is acquired by the user terminal after authenticating the second encrypted information to be valid.

In step 27, the biological identifier is authenticated, and the user is provided with service after the biological identifier is authenticated successfully.

As can be seen from the above description, in the identity information authentication method according to embodiments of the present disclosure, the service terminal is responsible for forwarding authentication information interacted between the user terminal and the authentication server. In practice, the authentication server is normally connected to a valid service terminal through an encrypted link. If the service terminal is an invalid phishing device, a forwarding function cannot be achieved by the service terminal; consequently, the bi-directional authentication fails and the user is alerted timely.

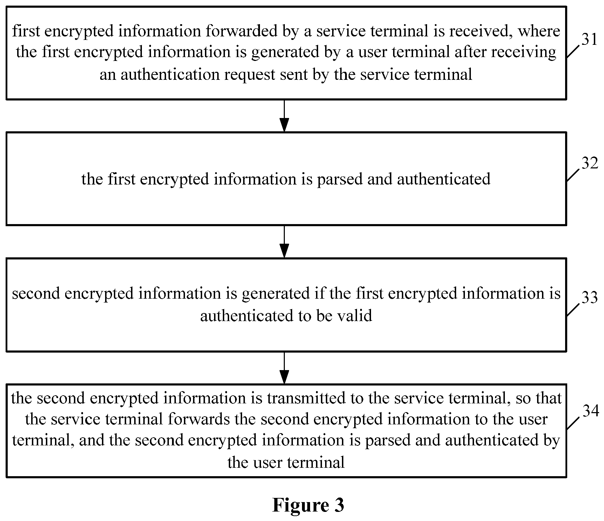

Correspondingly, as shown in Figure 3, an identity information authentication method applied at an authentication server side is provided in the present disclosure, which includes the following steps 31 to 34.

In step 31, first encrypted information forwarded by a service terminal is received, where the first encrypted information is generated by a user terminal after receiving an authentication request sent by the service terminal.

In step 32, the first encrypted information is parsed and authenticated.

In step 33, second encrypted information is generated if the first encrypted information is authenticated to be valid.

In step 34, the second encrypted information is transmitted to the service terminal, so that the service terminal forwards the second encrypted information to the user terminal, and the second encrypted information is parsed and authenticated by the user terminal.

In practice, an authentication server set by a service provider is normally connected to a valid service terminal through an encrypted link. Even if a user terminal is successfully authenticated by the authentication server, the user terminal may not have any interaction with an invalid service terminal. In addition, since all authentication processes before the biological identifier is transmitted are not performed on the service terminal, source programs (such as a user database, encryption and decryption algorithm mechanism) needed for the authentication processes can be merely set on the authentication server, thereby preventing data from being stolen by a fraudulent person through the service terminal.

Specifically, a private key signature of the user terminal may be carried in the above-described first encrypted information, in the step of parsing and authenticating the first encrypted information by the authentication server, firstly, the first encrypted information is parsed according to a preset decryption method to acquire the private key signature carried in the first encrypted information; then, the private key signature is authenticated; it is determined that the first encrypted information is valid if the private key signature is authenticated successfully; otherwise, it is determined that the first encrypted information is invalid. In practice, one private key signature may be set for each user who has been served, and the authentication server can determine whether a person transmitting the first encrypted information is a user of the authentication server by authenticating the private key signature in the first encrypted information, and the private key signature is successfully authenticated only when the person transmitting the first encrypted information is the user of the authentication server.

Similarly, a public key signature of the service terminal is carried in the above-described second encrypted information, in the step of parsing and authenticating the second encrypted information by the user terminal, firstly, the second encrypted information is parsed according to a preset decryption method to acquire the public key signature of the service terminal carried in the second encrypted information; then, the public key signature is authenticated, that is, an identity of the service terminal is authenticated; it is determined that the second encrypted information is valid if the public key signature is authenticated successfully; otherwise, it is determined that the second encrypted information is invalid.

An identity information authentication method according to some embodiments of the present disclosure is described in detail hereinafter based on a practical application.

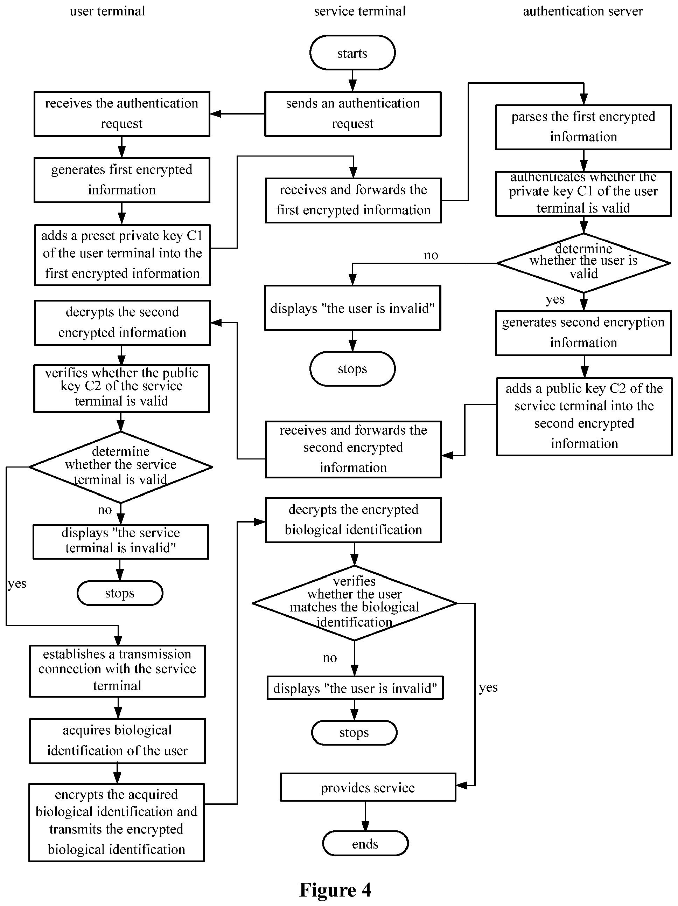

As shown in Figure 4, after a user terminal request for service from a service terminal, the service terminal sends an authentication request to the user terminal.

After receiving the authentication request, the user terminal generates first encrypted information using an encryption algorithm, adds a preset private key C1 of the user terminal into the first encrypted information, and transmits the first encrypted information carrying the private key C1 of the user terminal to the service terminal using WLAN, Bluetooth, infrared, laser or the like.

The service terminal does not process the received first encrypted information, and forwards the first encrypted information to an authentication server through an encrypted link between the service terminal and the authentication server.

After receiving the first encrypted information forwarded by the service terminal, the authentication server parses the first encrypted information according to a decryption algorithm preset by the authentication server and the user terminal together to acquire the private key C1 of the user terminal carried in the first encrypted information, and authenticates whether the private key C1 of the user terminal is valid to determine whether the user is valid. Optionally, the authentication server includes a user database in which private keys of various users are stored. The authentication server verifies whether the private key C1 of the user terminal is valid by comparing the private key C 1 of the user terminal obtained from the first encrypted information with the private keys of the various users stored in the user database; if the private key C 1 of the user terminal matches one of the private keys stored in the user database, it is determined that a user using the user terminal is valid; if the private key C 1 of the user terminal does not match all private keys stored in the user database, it is determined that the user using the user terminal is invalid. If it is determined that the user is invalid, the authentication server transmits a message that "the user is invalid" to the service terminal, a prompt that "the user is invalid" is displayed on the service terminal, and the flow of the identity information authentication method stops. If it is determined that the user is valid, the authentication server generates second encryption information according to a preset encryption algorithm, adds a public key C2 of the service terminal into the second encrypted information, and transmits the second encrypted information carrying the public key C2 of the service terminal to the service terminal through the encrypted link between the service terminal and the authentication server.

The service terminal does not process the second encrypted information, and forwards the second encrypted information to the user terminal using WLAN, Bluetooth, infrared, laser or the like.

The user terminal decrypts the second encrypted information according to a decryption algorithm preset by the user terminal and the authentication server together, and verifies whether the public key C2 of the service terminal is valid to determine whether the service terminal is valid. Optionally, the user terminal includes a service terminal database in which public keys of various service terminals are stored, and the user terminal verifies whether the public key C2 of the service terminal is valid by comparing the public key C2 of the service terminal obtained from the second encryption information with the public keys of the various service terminals stored in the service terminal database. If the public key C2 of the service terminal matches one of the public keys stored in the service terminal database, it is determined that the service terminal is valid; if the public key C2 of the service terminal does not match all the public keys stored in the service terminal database, it is determined that the service terminal is invalid. If it is determined that the service terminal is invalid, the flow of the identity information authentication method stops and a prompt that "the service terminal is invalid" is displayed to the user on a display module of the user terminal. If it is determined that the service terminal is valid, after a transmission connection is established between the user terminal and the service terminal, the user terminal acquires biological identifier such as retinal features, fingerprint features of the user, encrypts the acquired biological identifier according to a preset encryption algorithm, and transmits the encrypted biological identifier to the service terminal.

The service terminal decrypts the encrypted biological identifier according to a preset decryption algorithm, and verifies whether the user matches the biological identifier; if it is determined that the user does not match the biological identifier, a prompt that "the user is invalid" is displayed on the service terminal, and the flow of the identity information authentication method stops; if it is determined that the user matches the biological identifier, the service terminal provides service to the user, and the authentication process ends. Of course, if the service terminal is invalid, even if the biological identifier sent by the user terminal is obtained by the service terminal, the service terminal cannot decrypt the biological identifier since the service terminal is not aware of the corresponding decryption algorithm, thereby further protecting the security of the biological identifier of the user.

As can be seen from the above-described method flow, thanks to the protecting mechanism provided in the present disclosure, application of the biological identifier in service authentication is of enhanced utility and is expanded to some extent. In particular, in a teller machine transaction scenario, the user can log into his personal account on the teller machine using the biological identifier through a trusted personal terminal. Since there is no need of using a bank card and password in the whole process, it is more convenient and practical than a conventional transaction way.

Further, a user terminal (such as a mobile phone, a tablet computer or a wearable device) is provided according to some embodiments of the present disclosure, which can execute the identity information authentication method applied at the user terminal side described above.

Specifically, the user terminal includes an encryption module and a decryption module, and an encryption algorithm and a decryption algorithm set by an authentication server and the user terminal together are respectively stored in the encryption module and the decryption module. The user terminal can generate encrypted information that can be parsed only by a valid authentication server, and can parse encrypted information from the authentication server using the set decryption algorithm.

In addition, the user terminal includes an acquisition module capable of acquiring biological identifier of the user, such as a fingerprint collector and/or a retina collector, and performs data communication (encrypted information needed for authentication transmitted or received by the service terminal, and the biological identifier of the user) with the service terminal through WLAN, Bluetooth, infrared, laser or the like.

Further, the user terminal may include a display module capable of displaying authentication result information about the service terminal to the user.

The user terminal according to the embodiments is introduced above. It should be noted that the user terminal according to the embodiments corresponds to the identity information authentication method applied at the user terminal side described above, and therefore, the same technical effect can be achieved.

In addition, a service terminal is further provided according to some embodiments of the present disclosure, which can execute the identity information authentication method applied at the service terminal side described above.

In one aspect, the service terminal according to the embodiments establishes a connection with a user terminal through WLAN, Bluetooth, infrared, laser, or the like; in another aspect, the service terminal connects with an authentication server through an encrypted link. The service terminal forwards the first encrypted information generated from the user terminal to the authentication server, such that the authentication server authenticates whether the user terminal is valid. The encrypted data, fed back by the authentication server after the user terminal is authenticated to be valid, is forwarded by the service terminal to the user terminal, such that the service terminal is authenticated by the user terminal.

Specifically, the service terminal according to some embodiments may be a teller machine that supports transaction authentication with the user terminal based on biological identifier.

The service terminal according to the embodiments is introduced above. It should be noted that the service terminal according to the embodiments corresponds to the identity information authentication method applied at the service terminal side, and therefore, the same technical effect can be achieved.

In addition, an authentication server is further provided according to some embodiments of the present disclosure, which can execute the identity information authentication method applied at the authentication server side described above.

Specifically, the authentication server according to the embodiments includes an encryption module and a decryption module, and an encryption algorithm and a decryption algorithm set by the authentication server and a user terminal together are respectively stored in the encryption module and the decryption module. The authentication server can parse the encrypted information from the user terminal to authenticate whether the user terminal is valid, and can generate, after the user terminal is authenticated to be valid, the encrypted data that needs to be parsed by the user terminal.

The authentication server according to the embodiments is introduced above. It should be noted that the authentication server according to the embodiments corresponds to the identity information authentication method applied at the authentication server side described above, and therefore, the same technical effect can be achieved.

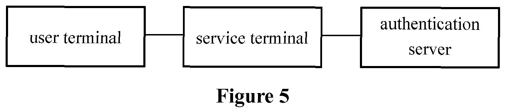

In addition, as shown in Figure 5, an authentication system is further provided according to some embodiments of the present disclosure, which includes the user terminal, the service terminal and the authentication server described above, and is capable of providing a service based on the biological identifier of the user and protecting the biological identifier from being stolen by others.

It should be appreciated for those skilled in the art that embodiments of the present disclosure may be provided as a method, an apparatus (a device), or a computer program product. Therefore, the present disclosure may take forms of a fully hardware embodiment, a fully software embodiment, or an embodiment combining software and hardware. Moreover, the present disclosure may be embodied in a form of a computer program product implemented on one or more computer usable storage media (including but not limited to magnetic disk storage, read-only optical disk, optical storage, or the like) in which computer-usable program codes are stored.

The present disclosure has been described with reference to the flow charts and/or block diagrams of the method, device (system) and computer program product according to the embodiments of the present disclosure. It should be understood that computer program instructions may be used to implement each of the work flows and /or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data processing devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

The above are merely the preferred embodiments of the present disclosure. It should be noted that, a person skilled in the art may make improvements and modifications without departing from the principle of the present disclosure, and these improvements and modifications shall also fall within the scope of the present disclosure.

## Claims

1. An identity information authentication method, applied to a user terminal, comprising steps of:
receiving an authentication request sent from a service terminal;
sending first encrypted information to the service terminal, so that the service terminal forwards the first encrypted information to an authentication server, and the authentication server parses and authenticates the first encrypted information;
receiving second encrypted information fed back by the authentication server, wherein the second encrypted information is generated by the authentication server after authenticating the first encrypted information to be valid, and is transmitted by the authentication server to the user terminal through the service terminal;
parsing and authenticating the second encrypted information; and
acquiring a biological identifier of a user in the case that the second encrypted information is authenticated to be valid and transmitting the biological identifier to the service terminal for authentication, so that the service terminal provides service to the user after the biological identifier is authenticated successfully.

2. The identity information authentication method according to claim 1, wherein
a private key signature of the user terminal is carried in the first encrypted information, and
wherein the authentication server authenticates the private key signature of the user terminal carried in the first encrypted information after parsing the first encrypted information; determines that the first encrypted information is valid, in the case that the private key signature of the user terminal is authenticated successfully; and determines the first encrypted information is invalid, in the case that the private key signature of the user terminal is not authenticated successfully.

3. The identity information authentication method according to claim 1, wherein
a public key signature of the service terminal is carried in the second encrypted information, and
wherein the step of parsing and authenticating the second encrypted information comprises:
parsing the second encrypted information to acquire the public key signature of the service terminal carried in the second encrypted information;
authenticating the public key signature of the service terminal;
determining that the second encrypted information is valid, in that case that the public key signature of the service terminal is authenticated successfully; and
determining that the second encrypted information is invalid, in the case that the public key signature of the service terminal is not authenticated successfully.

4. The identity information authentication method according to claim 1, wherein the first encryption information is encrypted according to a first encryption algorithm preset by the user terminal and the authentication server together, and the authentication server parses the first encrypted information according to a first decryption algorithm preset by the user terminal and the authentication server together;
the second encryption information is encrypted according to a second encryption algorithm preset by the user terminal and the authentication server together, and the user terminal parses the second encrypted information according to a second decryption algorithm preset by the user terminal and the authentication server together; and
wherein the first encryption algorithm is different from the second encryption algorithm, and the first decryption algorithm is different from the second decryption algorithm.

5. An identity information authentication method, applied to a service terminal, comprising steps of:
sending an authentication request to a user terminal;
receiving first encrypted information fed back by the user terminal in response to the authentication request;
forwarding the first encrypted information to an authentication server, so that the authentication server parses and authenticates the first encrypted information;
receiving second encrypted information transmitted by the authentication server, wherein the second encrypted information is generated by the authentication server after authenticating the first encrypted information to be valid;
forwarding the second encrypted information to the user terminal;
receiving a biological identifier of a user transmitted by the user terminal, the biological identifier being acquired by the user terminal after authenticating the second encrypted information to be valid; and
authenticating the biological identifier, and providing the user with service after the biological identifier is authenticated successfully.

6. The identity information authentication method according to claim 5, wherein a private key signature of the user terminal is carried in the first encrypted information, and
wherein the authentication server authenticates the private key signature of the user terminal carried in the first encrypted information after parsing the first encrypted information; determines that the first encrypted information is valid, in the case that the private key signature of the user terminal is authenticated successfully; and determines that the first encrypted information is invalid, in the case that the private key signature of the user terminal is not authenticated successfully.

7. The identity information authentication method according to claim 5, wherein a public key signature of the service terminal is carried in the second encrypted information, and
wherein the user terminal authenticates the public key signature of the service terminal carried in the second encrypted information after parsing the second encrypted information; determines that the second encrypted information is valid, in the case that the public key signature of the service terminal is authenticated successfully; and determines that the second encrypted information is invalid, in the case that the public key signature of the service terminal is not authenticated successfully.

8. The identity information authentication method according to claim 5, wherein the first encryption information is encrypted according to a first encryption algorithm preset by the user terminal and the authentication server together, and the authentication server parses the first encrypted information according to a first decryption algorithm preset by the user terminal and the authentication server together;
the second encryption information is encrypted according to a second encryption algorithm preset by the user terminal and the authentication server together, and the user terminal parses the second encrypted information according to a second decryption algorithm preset by the user terminal and the authentication server together, and
wherein the first encryption algorithm is different from the second encryption algorithm, and the first decryption algorithm is different from the second decryption algorithm.

9. An identity information authentication method, applied to an authentication server, comprising steps of:
receiving first encrypted information forwarded by a service terminal, wherein the first encrypted information is generated by a user terminal after receiving an authentication request from the service terminal;
parsing and authenticating the first encrypted information;
generating second encrypted information, in the case that the first encrypted information is authenticated to be valid; and
transmitting the second encrypted information to the service terminal, so that the service terminal forwards the second encrypted information to the user terminal, and the user terminal parses and authenticates the second encrypted information.

10. The identity information authentication method according to claim 9, wherein a private key signature of the user terminal is carried in the first encrypted information, and
wherein the step of parsing and authenticating the first encrypted information comprises:
parsing the first encrypted information to acquire the private key signature of the user terminal carried in the first encrypted information;
authenticating the private key signature of the user terminal;
determining that the first encrypted information is valid, in the case that the private key signature of the user terminal is authenticated successfully; and
determining that the first encrypted information is invalid, in the case that the private key signature of the user terminal is not authenticated successfully.

11. The identity information authentication method according to claim 9, wherein a public key signature of the service terminal is carried in the second encrypted information, and
wherein the user terminal authenticates the public key signature of the service terminal carried in the second encrypted information after parsing the second encrypted information; determines that the second encrypted information is valid, in the case that the public key signature of the service terminal is authenticated successfully; and determines that the second encrypted information is invalid, in the case that the public key signature of the service terminal is not authenticated successfully.

12. The identity information authentication method according to claim 9, wherein the first encryption information is encrypted according to a first encryption algorithm preset by the user terminal and the authentication server together, and the authentication server parses the first encrypted information according to a first decryption algorithm preset by the user terminal and the authentication server together;
the second encryption information is encrypted according to a second encryption algorithm preset by the user terminal and the authentication server together, and the user terminal parses the second encrypted information according to a second decryption algorithm preset by the user terminal and the authentication server together, and
wherein the first encryption algorithm is different from the second encryption algorithm, and the first decryption algorithm is different from the second decryption algorithm.

13. A user terminal, comprising one or more hardware processors and a storage medium in which computer-readable operational instructions are stored, wherein when the computer-readable operational instructions in the storage medium are run, the one or more hardware processors execute the identity information authentication method according to any one of claims 1 to 4.

14. The user terminal according to claim 13, wherein the biological identifier of the user is a fingerprint feature and/or a retinal feature of the user; and
the user terminal is a mobile device having a fingerprint collector and/or a retina collector.

15. A service terminal, comprising one or more hardware processors and a storage medium in which computer-readable operational instructions are stored, wherein when the computer-readable operational instructions in the storage medium are run, the one or more hardware processors execute the identity information authentication method according to any one of claims 5 to 8.

16. The service terminal according to claim 15, wherein the service terminal is a teller machine.

17. An authentication server, comprising one or more hardware processors and a storage medium in which computer-readable operational instructions are stored, wherein when the computer-readable operational instructions in the storage medium are run, the one or more hardware processors execute the identity information authentication method according to any one of claims 9 to 12.

18. A service system, comprising the user terminal according to claim 13 or 14, the service terminal according to claim 15 or 16, and the authentication server according to claim 17.
